# FASCICULE DE BREVET EUROPEEN

(11) **EP 0 814 274 B1**
(45) Date de publication et mention de la délivrance du brevet: **24.07.2002**
(21) Numéro de dépôt: 97109933.8
(22) Date de dépôt: 13.06.1997
(51) Int. Cl.: F16C 11/06

(54) **Dispositif pour la fixation de l'articulation d'un cylindre émetteur sur une pédale d'embrayage d'un véhicule automobile**
Vorrichtung zum Befestigen des Gelenkes eines Druckzylinders auf ein Kupplungspedal von einem Kraftfahrzeug
Fixing device for the trunnion of a pressure cylinder to a clutch pedal of an automobile

(30) Priorité: 18.06.1996 FR 9607661
(43) Date de publication de la demande: 29.12.1997
(73) Titulaire: VALEO, 75017 Paris (FR)
(72) Inventeur: Tobiasz, André, 93800 Epinay-sur-Seine (FR)
(74) Mandataire: Gamonal, Didier

(56) Documents cités:
- FR-A- 748 238
- FR-A- 865 926
- FR-A- 2 651 838
- US-A- 4 650 363
- US-A- 5 163 773

## Description

La présente invention concerne un dispositif pour la fixation et l'articulation d'une extrémité d'un composant sur un levier d'actionnement de ce composant selon le préambule de la revendication 1 comme connu par FR-A-2 651 838.

L'invention concerne plus particulièrement un dispositif pour la fixation et l'articulation de l'extrémité d'un cylindre émetteur de commande hydraulique d'un embrayage sur une pédale d'embrayage de véhicule automobile.

La commande hydraulique d'un embrayage de véhicule automobile peut être assurée au moyen d'un cylindre émetteur hydraulique de conception générale en forme de vérin, constitué pour l'essentiel par un corps de cylindre à l'intérieur duquel est monté coulissant un piston comportant une tige de piston dont l'extrémité libre fait saillie axialement à l'extérieur du corps de cylindre.

Pour actionner le cylindre émetteur, le conducteur peut par exemple agir sur une pédale d'embrayage montée articulée sur la structure de la caisse du véhicule automobile et qui est reliée par exemple à l'extrémité libre de la tige de piston, le corps du cylindre émetteur étant par ailleurs fixé sur le tablier du véhicule.

Ainsi lorsque le conducteur appui sur la pédale d'embrayage, la chambre à volume variable, délimitée par le corps du cylindre émetteur et le piston associé, est pressurisée.

Afin d'assurer un fonctionnement harmonieux du cylindre émetteur, il est nécessaire que l'extrémité libre de la tige du piston soit montée articulée sur la pédale d'embrayage.

A cet effet, il a déjà été proposé d'utiliser un dispositif de fixation qui comporte une rotule montée pivotante dans un boîtier portant un siège d'appui de forme complémentaire, la rotule pouvant être fixée soit à l'extrémité libre de la tige de piston, soit sur la pédale, tandis que le boîtier du dispositif de fixation est fixé, à l'opposé, sur la pédale, ou l'extrémité libre de la tige de piston.

Par ailleurs, il est souhaitable que le raccordement entre la tige de piston et la pédale puisse s'effectuer le plus aisément possible et si possible de manière automatisée, c'est-à-dire en ne faisant appel à aucun organe complémentaire de montage et de fixation, tel qu'une goupille, un rivet, une vis, etc.

La présente invention a pour objet de proposer un dispositif pour la fixation et l'articulation à rotule du type mentionné précédemment, qui satisfasse à ces exigences.

Dans ce but, l'invention propose un dispositif qui est caractérisé par la seconde partie de la revendication 1.

Grâce à l'invention, on conçoit qu'il est particulièrement aisé de raccorder un cylindre émetteur d'embrayage à une pédale dans la mesure où cette opération est obtenue par simple déplacement axial relatif du composant qui porte la rotule par rapport au composant qui porte le boîtier en vue d'obtenir l'emboîtement élastique de la rotule à l'intérieur du boîtier.

La conception selon l'invention est aussi particulièrement avantageuse en ce qu'elle permet indifféremment d'agencer la rotule sur la pédale d'embrayage ou sur le cylindre émetteur, notamment à l'extrémité libre de la tige de piston de ce dernier, et inversement le boîtier en forme de tulipe sur le cylindre émetteur, notamment à l'extrémité libre de la tige de piston de ce dernier, ou sur la pédale.

De préférence chaque pétale présente un doigt pour retenir la rotule et diminuer les usures et les contraintes.

Selon d'autres caractéristiques de l'invention :
- l'extrémité libre de chaque pétale comporte, sur sa face interne, une portion de surface sphérique creuse complémentaire de la rotule qui coopère avec cette dernière pour la guider en pivotement et la retenir à l'intérieur du boîtier ;
- le dispositif comporte des moyens de verrouillage des pétales qui empêchent leur déformation élastique ;
- les moyens de verrouillage sont constitués par un manchon de verrouillage qui est monté mobile axialement entre une position arrière de verrouillage dans laquelle il entoure extérieurement les extrémités libres des pétales du boîtier et une position avant escamotée dans laquelle les extrémités des pétales peuvent être déformées élastiquement, sensiblement radialement vers l'extérieur ;
- le manchon de verrouillage est rappelé élastiquement vers sa position de verrouillage ;
- la face externe des extrémités libres des pétales est conformée en tronçon de cône et la surface interne du manchon de verrouillage comporte un tronçon conique complémentaire, la position de verrouillage du manchon de verrouillage étant déterminée par la venue en contact de ces deux surfaces coniques ;
- les extrémités libres des pétales sont délimitées par une surface transversale d'extrémité avant, et le manchon de verrouillage comporte une surface d'extrémité axiale arrière, d'orientation sensiblement radiale, la position escamotée du manchon de verrouillage étant déterminée par la venue en contact de ces deux surfaces d'extrémités ;
- le noyau comporte, au voisinage de son extrémité avant, une portée latérale cylindrique contre laquelle prennent appui des portions de surface cylindrique complémentaires formées dans la face interne des extrémités des pétales ;
- le noyau comporte des ailettes radiales de guidage de ses déplacements à l'intérieur du boîtier dont chacune est reçue en coulissement dans une fente correspondante qui délimite deux pétales adjacents du boîtier ;
- les ailettes font saillie radialement à l'extérieur du boîtier et chaque ailette est délimitée radialement par un bord d'orientation sensiblement axiale, ces bords constituant une portée de centrage pour un ressort de rappel du manchon de verrouillage qui est un ressort hélicoïdal de traction dont une extrémité avant est fixée au manchon et dont l'extrémité axiale arrière est fixée aux ailettes en sorte que la rotule est maintenue sans jeu dans le boîtier ;
- la rotule est fixée à la pédale d'embrayage ;
- le cylindre émetteur comporte un piston et un corps de cylindre, et en ce que le boîtier est fixé à l'extrémité libre de la tige de piston ;
- le cylindre émetteur comporte un piston et un corps de cylindre, et le boîtier est fixé au corps de cylindre.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique qui illustre l'agencement d'un dispositif conforme aux enseignements de l'invention pour relier une pédale d'embrayage à un cylindre émetteur ;
- la figure 2 est une vue en perspective éclatée des principaux composants d'un dispositif de fixation et d'articulation réalisé conformément aux enseignements de l'invention ;
- la figure 3 est une vue en section axiale, selon la ligne 3-3 de la figure 4, qui illustre le dispositif de fixation et d'articulation en position montée ;
- la figure 4 est une vue en section, selon la ligne 4-4 de la figure 3 ; et
- les figures 5 et 6 sont des vues similaires à celles des figures 3 et 4 qui illustrent le dispositif en position de montage avant emboîtement élastique de la rotule.

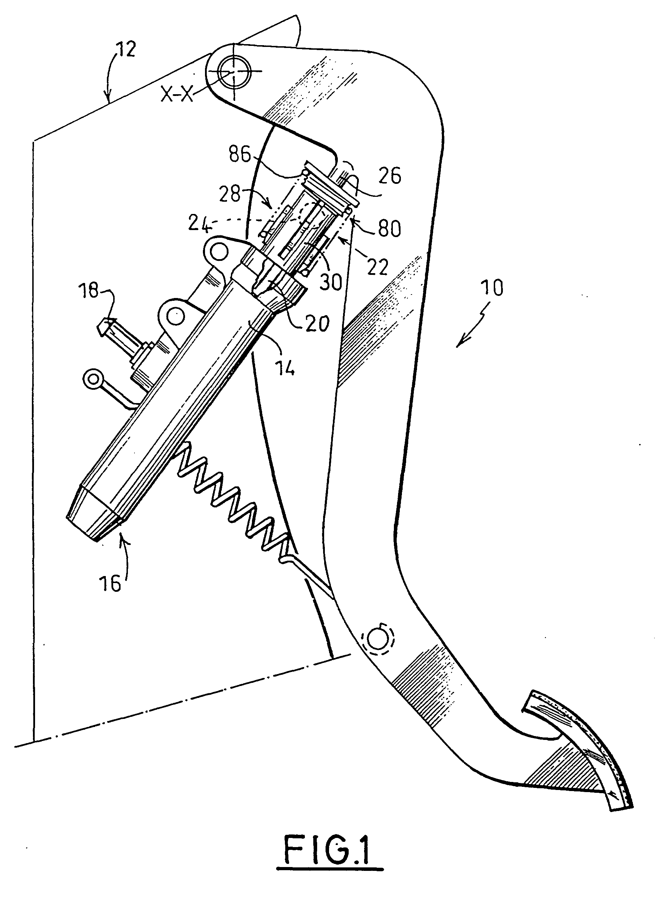

On reconnaît sur la figure 1 une pédale d'embrayage 10 qui est montée articulée autour d'un axe horizontal X-X sur un élément 12 appartenant à la structure de la caisse d'un véhicule automobile, par exemple au tablier séparant le compartiment moteur de l'habitacle, et sur lequel est fixé le corps 14 d'un cylindre hydraulique émetteur d'embrayage 16 qui comporte notamment un raccord 18 destiné à relier sa chambre de commande (non représentée) à un cylindre hydraulique récepteur associé à l'embrayage du véhicule.

Le cylindre émetteur comporte un piston coulissant dont la tige 20 fait saillie axialement à l'extérieur du corps 14 et est relié à la pédale 10 par un dispositif de fixation et d'articulation 22 réalisé conformément aux enseignements de l'invention.

Pour mémoire on rappellera que le piston est monté à l'intérieur du corps 14 et définit avec celui-ci la chambre de commande à volume variable. En appuyant sur la pédale d'embrayage 10, le conducteur met sous pression la chambre de commande ainsi que celle du cylindre récepteur.

Le dispositif 22 comporte une rotule d'articulation 24 qui, dans l'agencement illustré à la figure 1, est réalisée venue de matière à l'extrémité d'une tige 26 appartenant au corps de la pédale 10, et un boîtier en forme de tulipe 28 qui, dans l'agencement illustré sur la figure 1, est fixé à l'extrémité libre de la tige de piston 20 du cylindre émetteur 16.

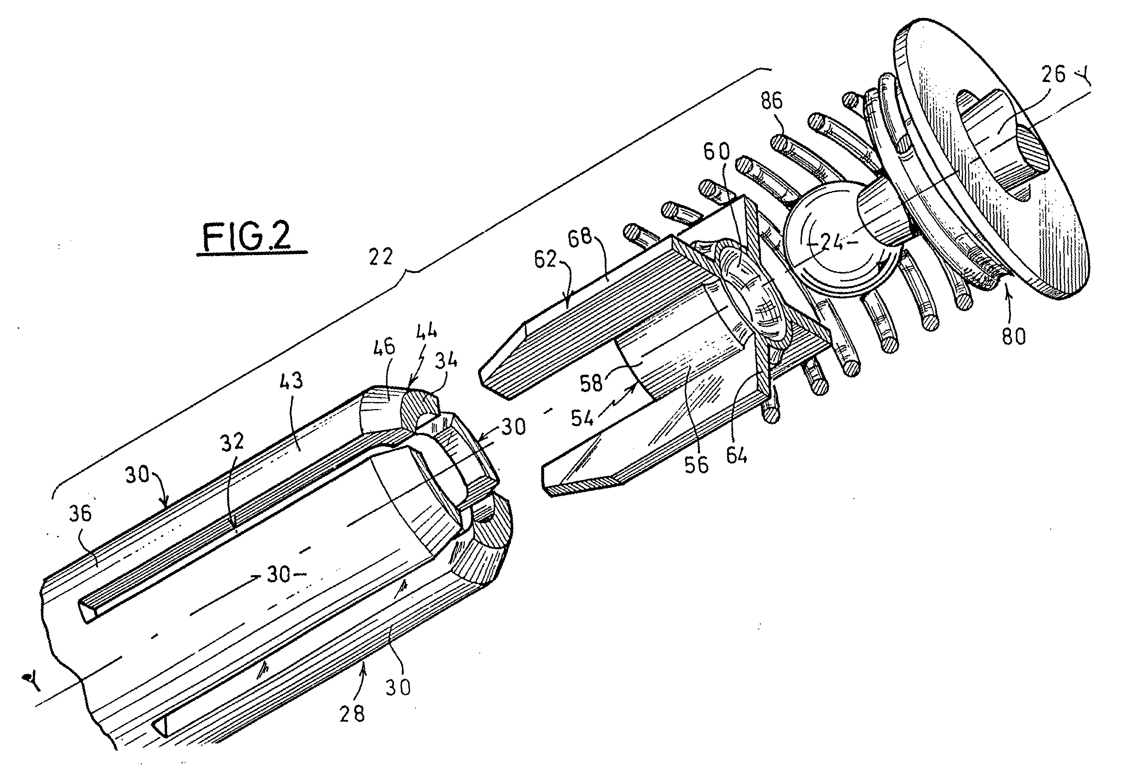

On se reportera maintenant aux figures 2 à 6 pour la description détaillée d'un mode de réalisation du dispositif de fixation 22.

Le boîtier 28, selon l'invention, est en forme de tulipe.

Dans le mode de réalisation illustré aux figures, le boîtier est une tulipe à quatre pétales 30 d'orientation axiale répartis angulairement de manière régulière autour de l'axe principal Y-Y du dispositif 22 (et donc du boîtier 28) et qui sont séparés les uns des autres par quatre fentes 32 qui s'étendent axialement depuis la face transversale d'extrémité avant 34 vers le fond arrière 36 du boîtier.

Les pétales 30 sont donc déformables élastiquement radialement et peuvent se déployer radialement vers l'extérieur. Ces pétales 30 sont issus du fond de la tulipe.

Plus précisément la partie arrière ou fond 36 du boîtier 28 est délimitée par une paroi interne transversale de fond 40 à partir de laquelle s'étendent axialement les corps en forme de lame 42 des pétales 30 qui se prolongent jusqu'à leurs extrémités libres 44 en forme de doigt qui s'étendent sensiblement radialement vers l'intérieur pour retenir selon l'invention la rotule. Bien entendu, en variante, certains pétales 30 peuvent être dépourvus de doigts à leur extrémité libre. De préférence tous les pétales présentent des doigts pour une meilleure retenue de la rotule.

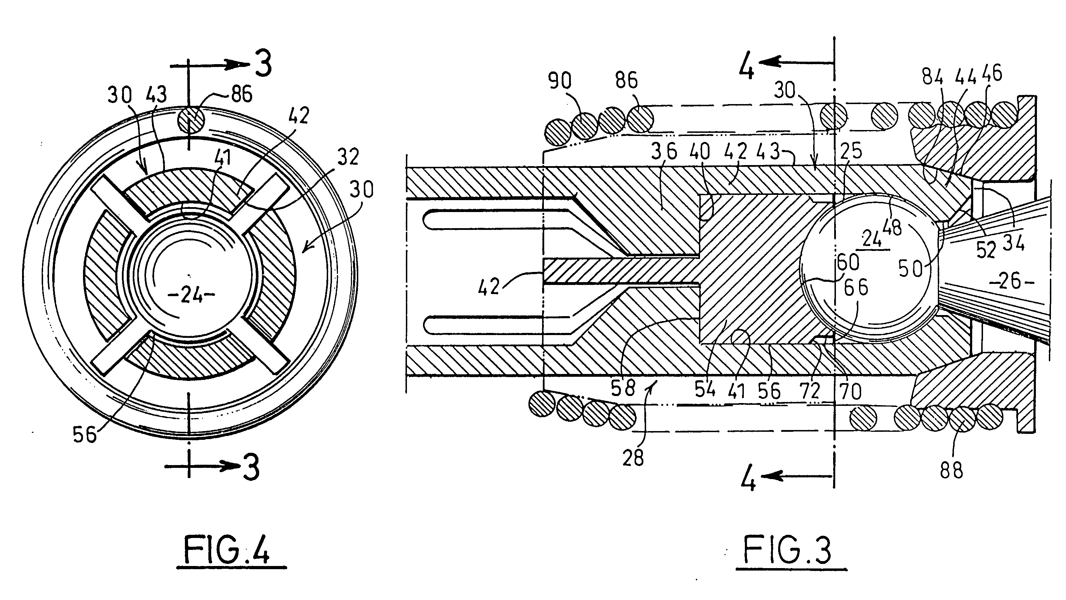

Chaque corps en forme de lame 42 a une forme tuilée et présente en section transversale, et comme on peut le voir notamment à la figure 4, un profil annulaire interne 41 et externe 43.

Dans une forme de réalisation préférentielle, pour le meilleur contact avec la rotule, les doigts de retenue 44 précités sont conformés de manière spéciale. Ainsi au voisinage de son extrémité libre avant 44, chaque pétale 30 comporte un tronçon de surface conique convexe 46 qui s'étend depuis l'extrémité libre de la surface cylindrique annulaire 43 jusqu'à la face transversale d'extrémité 34.

Au voisinage de son extrémité libre 44 chaque pétale 30 comporte sur sa face interne une portion de surface sphérique 48 qui s'étend depuis l'extrémité de la surface cylindrique annulaire interne 41 jusqu'à un tronçon de surface cylindrique interne 50, ce dernier étant relié à la face transversale d'extrémité 34 par un chanfrein conique 52.

Les portions de surface sphérique creuse 48 sont de forme concave et sont complémentaires de la surface sphérique convexe 25 de la rotule 24, c'est-à-dire qu'elle présente sensiblement le même rayon. Les portions de surface 48 permettent de guider la rotule 24 et de la retenir à l'intérieur du boîtier 28. Elles forment donc un siège de retenue et de guidage 48.

Selon une caractéristique de l'invention, le boîtier 28 en forme de tulipe délimite, par les surfaces cylindriques internes 41 des pétales 30 et par sa paroi de fond arrière 40 un logement dans lequel est monté coulissant un noyau 54 soumis à l'action d'un ressort de traction 86 décrit ci-après.

Le noyau 54, monté selon l'invention à l'intérieur des pétales 30, est une pièce massive de forme générale cylindrique délimitée latéralement par une paroi cylindrique 56, transversalement vers l'arrière par une face transversale arrière 58 d'orientation radiale (ou transversale) qui, en position montée et comme cela est illustré à la figure 3, vient en appui contre la paroi de fond 40 du boîtier 28, et transversalement vers l'avant, par un siège 60 d'appui en forme de calotte sphérique creuse complémentaire de la surface sphérique convexe 25 de la rotule 24. Le siège 60 forme donc une surface sphérique concave.

La longueur du noyau 54 est telle que, en position montée, la surface sphérique concave 60 et les portions de surface sphérique 48 concave soient sensiblement centrées autour de l'axe de la rotule 24 de manière, en combinaison, à constituer globalement dans un creux un siège sphérique en deux parties 48,60 (l'une de retenue, l'autre d'appui) pour la rotule 24 dans lequel cette dernière peut pivoter autour de son centre.

Le noyau 54 comporte quatre ailettes 62 d'orientation axiale, réparties angulairement de manière régulière, et dont chacune s'étend radialement vers l'extérieur à partir de la surface cylindrique 56 pour être reçue avec jeu et en coulissement dans une fente correspondante 32 séparant deux pétales adjacents 30. Le noyau 54 est donc solidaire en rotation du boîtier par coopération de formes du type tenons (les ailettes 62) - mortaises (les fentes 32). Bien entendu les fentes 32 sont plus longues que les ailettes 62.

Chaque ailette 62 s'étend axialement vers l'arrière au-delà de la face transversale d'extrémité arrière 58 du noyau 54 et est délimitée axialement vers l'avant par un bord transversal d'extrémité 64 qui s'étend au droit du bord transversal avant d'extrémité 66 du noyau 54.

Chaque ailette 62 est délimitée radialement vers l'extérieur par un bord 68 parallèle à l'axe du dispositif et qui est situé radialement vers l'extérieur par rapport à la paroi cylindrique annulaire externe 43 des pétales 30. Les ailettes 62 traversent donc chacune en saillie radiale par rapport à la fente 32 concernée.

Au voisinage de son bord transversal avant d'extrémité 66, la paroi cylindrique 56 du noyau 54 comporte une portée cylindrique 70 d'orientation axiale, de diamètre inférieur, qui est délimitée axialement vers l'arrière par un épaulement 72 formant une butée propre à coopérer, de manière décrite ci-après, avec les doigts précités des extrémités libres 44 des pétales 30.

Chaque pétale 30 est susceptible d'être déformé élastiquement, selon une direction sensiblement radiale, de manière à écarter radialement les extrémités libres 44 des pétales 30 depuis leur position normale de repos à l'état libre, correspondant à la position montée illustrée à la figure 3, vers une position de montage permettant selon l'invention l'introduction plus aisée de la rotule 24 par emboîtement élastique, à l'intérieur du boîtier 28 selon l'axe principal Y-Y du boîtier.

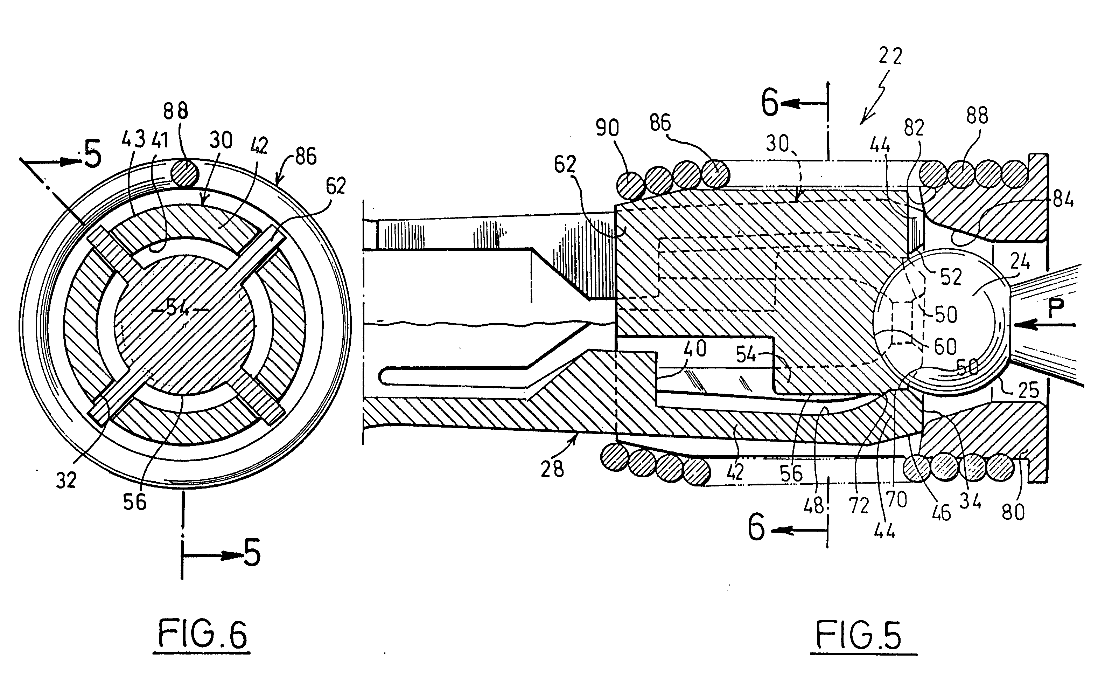

A cet effet, le noyau 54 peut être déplacé axialement d'arrière en avant, c'est-à-dire de la gauche vers la droite en considérant la figure 3, pour l'amener dans la position de montage qu'il occupe à la figure 5 dans laquelle les extrémités libres 44 des pétales 30 prennent appui, par leurs portions de surface cylindrique interne 50, sur la portée cylindrique 70 du noyau 54.

Dans cette position, les doigts des extrémités libres 44 sont écartés radialement, à l'encontre de leur élasticité propre, et ils délimitent ainsi une ouverture de plus grand diamètre pour l'introduction de la rotule 24 à l'intérieur du boîtier 28.

Le noyau 54 peut être amené dans la position de montage illustrée à la figure 5, en agissant sur celui-ci par l'intermédiaire de ses ailettes 62 qui sont saillie radialement à l'extérieur du boîtier, à travers les fentes 32, la position de montage étant définie axialement par la venue en butée des surfaces internes cylindriques 50 des extrémités 44 des pétales 30 contre l'épaulement 72 évitant ainsi une extraction du noyau 54.

On notera que l'épaulement 72 est incliné car c'est les zones d'extrémité des surfaces 48 qui viennent en contact avec l'épaulement 72. C'est donc les zones d'extrémité de raccordement des surfaces concaves 48 aux surfaces internes cylindriques 50, qui forment une contrebutée pour l'épaulement 72.

Pour introduire la rotule 24 dans le boîtier 28, en partant de la position illustrée à la figure 5, il suffit de venir pousser la rotule 24 contre le siège sphérique creux 60 du noyau 54 et de prolonger l'effort de poussée, selon la flèche P de la figure 5 (selon l'axe principal Y-Y du boîtier 28), de manière à provoquer le recul du noyau 54 à l'intérieur du boîtier 28 d'avant en arrière, c'est-à-dire de la droite vers la gauche en considérant la figure 5, jusqu'à coopération de l'extrémité transversale arrière 58 du noyau avec la paroi 40 du boîtier 28.

Au cours de ce mouvement, la surface sphérique convexe 25 de la rotule 24 coopère avec le chanfrein 52 des extrémités 44 des pétales 30 pour écarter radialement ceux-ci davantage jusqu'à ce que la rotule 24 franchisse, par son plan transversal diamétral, les extrémités 44 en forme de doigts des pétales 30 pour se retrouver emprisonnée à l'intérieur du boîtier 28 et venir occuper la position montée illustrée à la figure 3 dans laquelle la rotule est maintenue élastiquement, c'est-à-dire pratiquement sans jeu, par les extrémités libres 44 des pétales 30 en coopérant avec le siège 60. La rotule 24 est ainsi montée dans un logement défini par le siège d'appui 60 et le siège de retenue 48.

Conformément à un autre aspect de l'invention, il est prévu un manchon 80 de verrouillage du dispositif en position montée. Ce manchon est escamotable pour déverrouiller le dispositif.

Le manchon 80 a essentiellement pour fonction d'empêcher tout écartement accidentel des extrémités libres 44 des pétales 30, c'est-à-dire d'empêcher tout échappement axial accidentel de la rotule 24 hors du boîtier 28 sous l'effet d'un effort de traction appliqué à cette dernière visant à la faire sortir de son logement 48, 60.

A cet effet, le manchon 80 est une pièce de forme générale de révolution qui comporte, au voisinage de sa face transversale arrière 82, un cône interne concave 84 d'angle au sommet sensiblement égal à celui des surfaces coniques convexes 46 des extrémités 44 des pétales 30 qui, en position de verrouillage et comme cela est illustré sur la figure 3, entoure ces surfaces coniques 46 et donc les extrémités 44 des pétales 30.

Le manchon de verrouillage 80 est rappelé élastiquement vers sa position de verrouillage illustrée à la figure 3 par un ressort hélicoïdal de traction 86 dont une extrémité 88 est fixée, par vissage, sur le manchon 80 et dont l'autre extrémité 90 est retenue axialement sur les parties arrière inclinées des bords 68 des ailettes 42.

La fixation de l'extrémité 88 peut être réalisée par emmanchement à force, par emboîtement, vissage ou autres. Ici le manchon 80 présente des empreintes à sa périphérie externe et l'extrémité 88 est emboîtée à force dans les empreintes. Bien entendu le manchon présente une collerette saillante formant un épaulement d'appui pour la spire d'extrémité du ressort 86.

Ainsi, le ressort 86 sollicite en permanence le manchon 80 axialement d'avant en arrière, c'est-à-dire de la droite vers la gauche par rapport au manchon 54 et donc par rapport aux extrémités 44 empêchant d'une part tout écartement radial des extrémités 44 et, exerçant, d'autre part, un effort de serrage selon la direction radiale de ces extrémités 44 en coopération avec la rotule 24.

Pour déverrouiller le dispositif 22, notamment en vue du montage de la rotule 24 à l'intérieur du boîtier 28, ou pour faciliter le démontage, il suffit d'escamoter le manchon de verrouillage 80 et donc de tirer axialement le manchon 80 d'arrière en avant, c'est-à-dire de la gauche vers la droite en considérant la figure 3, pour l'amener dans la position avant escamotée illustrée à la figure 5 dans laquelle le manchon 80 prend appui, par sa face transversale d'extrémité arrière 82, contre la face transversale avant 34 des pétales 30, ces derniers étant écartés radialement par le noyau 54.

Le ressort 86 est déchargé dans cette position avant escamotée du manchon 80 permetttant également le démontage de la rotule 25.

Dès que l'on introduit la rotule 24 à l'intérieur du boîtier 28, selon la procédure décrite précédemment, le manchon 80 sous l'action du ressort 86, vient occuper à nouveau sa position de verrouillage illustrée à la figure 3 et délimitée par la venue en appui mutuel des surfaces coniques 46 et 84.

Bien entendu pour démonter la rotule, on tire également sur le manchon de verrouillage pour libérer les pétales 30 de manière précitée. Avantageusement on crée un jeu axial entre le manchon 80 et la face transversale 34 pour pouvoir libérer facilement les pétales et déplacer le noyau 54 en direction des extrémités 44. Si besoin est, on peut également déplacer manuellement les ailettes 62.

L'invention n'est pas limitée au mode de réalisation qui vient d'être décrit, ni à l'agencement illustré à la figure 1.

La rotule 24 du dispositif 22 peut notamment être formée à l'extrémité libre de la tige de piston 20 et le boîtier 28 peut être porté par le corps de la pédale 10.

A titre de variante, et dans le cas où l'émetteur d'embrayage 16 est relié à la caisse 12 du véhicule automobile par l'extrémité libre de la tige de piston 20, c'est le corps 14 de l'émetteur 16 qui peut être équipé du boîtier 28 ou de la rotule 24.

Ainsi qu'on l'aura compris, le siège d'appui 60 est dirigé (tourné) vers les extrémités libres 44 des pétales. Le noyau 54 est sollicité élastiquement axialement en direction desdites extrémités par le ressort 86.

Le montage initial du noyau 54 dans le boîtier est réalisé par simple enfilage axial avec déploiement des extrémités 44. Après l'épaulement 72 empêche le noyau 54 de sortir. Le manchon 80 normalement empêche une déformation des pétales 30.

## Revendications

1. Dispositif (22) pour la fixation et l'articulation d'une extrémité d'un composant sur un levier d'actionnement de composant, notamment pour la fixation et l'articulation d'une extrémité (20) d'un cylindre émetteur (16) de commande d'un embrayage sur une pédale (10) d'embrayage d'un véhicule automobile, du type comportant une rotule (24) montée pivotante dans un boîtier (28) portant un siège d'appui (60) de forme complémentaire, dans lequel le boîtier (28) est réalisé sous forme d'une tulipe avec des pétales (30) d'orientation axiale s'étendant à partir d'une paroi interne de fond (40) que présente ledit boîtier, chaque pétale (30) présentant un corps en forme de lame (42) déformable élastiquement radialement pour permettre l'introduction de la rotule (24,25) dans le boîtier (28) à l'intérieur des pétales (30) par emboîtement élastiques selon l'axe principal (Y-Y) du boîtier (28), et dans lequel le siège d'appui (60), d'une part, est monté à l'intérieur des pétales (30) en étant dirigé vers l'extrémité libre (44) des pétales (30), et, d'autre part, conformée en calotte sphérique creuse, l'extrémité libre (44) d'au moins certains pétales (30) étant en forme de doigts pour retenir la rotule (24) à l'intérieur du boîtier (28) **caractérisé en ce que** le siège (60) conformé en calotte sphérique est réalisé à une extrémité axiale avant d'un noyau (54) monté, en position de montage avant emboîtement élastique de la rotule coulissant axialement à l'intérieur du boîtier (28) entre une position arrière de repos dans laquelle il est en appui, par son extrémité axiale arrière (58), contre la paroi interne de fond (40) du boîtier, et une position avant de montage dans laquelle les pétales (30) sont écartés radialement vers l'extérieur et prennent appui élastiquement contre une portion en vis à vis (70) de la paroi latérale (56) du noyau.

2. Dispositif selon la revendication 1, **caractérisé en ce que** le noyau (54) comporte, au voisinage de son extrémité avant, une portée latérale cylindrique (70) conte laquelle prennent appui des portions (50) de surface cylindrique complémentaires formées dans la face interne des extrémités (44) des pétales (30).

3. Dispositif selon l'une des revendications 1 ou 2, **caractérisé en ce que** le noyau (54) comporte des ailettes radiales (62) de guidage de ses déplacements à l'intérieur du boîtier (28) dont chacune est reçue en coulissement dans une fente correspondante (32) qui délimite deux pétales adjacents (30) du boîtier (28).

4. Dispositif selon l'une quelconque des revendications précédentes, **caractérisé en ce que** l'extrémité libre (44) de chaque pétale (30) comporte, sur sa face interne, une portion de surface sphérique creuse (48) complémentaire de la rotule (24, 25) qui coopère avec cette dernière pour la guider en pivotement et la retenir à l'intérieur du boîtier (28).

5. Dispositif selon l'une quelconque des revendications précédentes, **caractérisé en ce qu'**il comporte des moyens (80) de verrouillage des pétales (30) qui empêchent leur déformation élastique.

6. Dispositif selon la revendication 5, **caractérisé en ce que** les moyens de verrouillage sont constitués par un manchon de verrouillage (80) qui est monté mobile axialement entre une position arrière de verrouillage dans laquelle il entoure extérieurement les extrémités libres (44) des pétales (30) du boîtier (28) et une position avant escamotée dans laquelle les extrémités (44) des pétales (30) peuvent être déformées élastiquement, sensiblement radialement vers l'extérieur.

7. Dispositif selon la revendication 6, **caractérisé en ce que** le manchon de verrouillage (80) est rappelé élastiquement vers sa position de verrouillage.

8. Dispositif selon l'une des revendications 6 ou 7, **caractérisé en ce que** la face externe des extrémités libres (44) des pétales (30) est conformée en tronçon de cône (46), et **en ce que** la surface interne du manchon de verrouillage (80) comporte un tronçon conique (84) complémentaire, la position de verrouillage du manchon de verrouillage (80) étant déterminée par la venue en contact de ces deux surfaces coniques (46, 84).

9. Dispositif selon l'une quelconque des revendications 6 à 8, **caractérisé en ce que** les extrémités libres (44) des pétales (30) sont délimitées par une surface transversale d'extrémité avant (34), et **en ce que** le manchon de verrouillage (80) comporte une surface d'extrémité axiale arrière (82), d'orientation sensiblement radiale, la position escamotée du manchon de verrouillage (80) étant déterminée par la venue en contact de ces deux surfaces d'extrémités (34, 82).

10. Dispositif selon la revendication 3, **caractérisé en ce que** les ailettes (62) font saillie radialement à l'extérieur du boîtier (28) et en que chaque ailette est délimitée radialement par un bord (68) d'orientation sensiblement axiale, ces bords constituant une portée de centrage pour un ressort (86) de rappel du manchon de verrouillage (80) qui est un ressort hélicoïdal de traction dont une extrémité avant (88) est fixée au manchon (80) et dont l'extrémité axiale arrière (90) est fixée aux ailettes (62).

11. Dispositif selon l'une quelconque des revendications 1 à 10, **caractérisé en ce que** le noyau (54) est soumis à l'action d'un ressort de traction (86).

12. Dispositif pour la fixation et l'articulation de l'extrémité d'un cylindre émetteur (16) de commande d'un embrayage sur une pédale (10) d'embrayage d'un véhicule automobile selon l'une quelconque des revendications précédentes, **caractérisé en ce que** la rotule (24) est fixée à la pédale d'embrayage (10).

13. Dispositif selon la revendication 12, **caractérisé en ce que** le cylindre émetteur (16) comporte un piston et un corps de cylindre (14), et **en ce que** le boîtier (28) est fixé à l'extrémité libre de la tige (20) de piston.

14. Dispositif selon la revendication 12, **caractérisé en ce que** le cylindre émetteur (16) comporte un piston et un corps de cylindre (14), et **en ce que** le boîtier est fixé au corps de cylindre.

## Claims

1. A device (22) for fastening and articulating an end of a component on a lever for actuating the component, in particular for fastening and articulating an end portion (20) of an emitter cylinder (16) for controlling a clutch on a clutch pedal (10) of a motor vehicle, of the type comprising a knuckle (24) mounted for pivoting movement in a housing (28) which carries a thrust seating (60) of complementary form, wherein the housing (28) is made in the form of a tulip with axially oriented petals (30) extending from an inner base wall (40) of the said housing, each petal (30) having a body in the form of a web (42) which is elastically deformable radially so as to enable the knuckle (24, 25) to be introduced into the housing (28) inside the petals (30) in elastic mating engagement along the main axis (Y-Y) of the housing (28), and wherein the thrust seating (60), firstly, is mounted inside the petals (30), being directed towards the free end (44) of the petals (30), and secondly, is configured like a hollow spherical skull cap, the free end (44) of at least some of the petals (30) being in the form of fingers for retaining the knuckle (24) within the housing (28), **characterised in that** the seating (60) configured like a spherical skull cap is formed at a front axial end of a core (54) which is mounted, in a fitting position prior to the elastic insertion of the knuckle, for axial sliding movement within the housing (28) between a rear or rest position in which it is in engagement, through its rear axial end (58), against the internal base wall (40) of the housing, and a front or fitted position in which the petals (30) are spaced apart radially outwards and are in elastic engagement against a facing portion (70) of the side wall (56) of the core.

2. A device according to Claim 1, **characterised in that** the core (54) includes, in the vicinity of its front end, a cylindrical side wall (70) against which complementary cylindrical surface portions (50), formed in the internal face of the ends (44) of the petals (30), bear.

3. A device according to Claim 1 or Claim 2, **characterised in that** the core (54) includes radial fins (62) for guiding its displacements within the housing (28), each said fin being received in sliding engagement in a corresponding slot (32) which delimits two adjacent petals (30) of the housing (28).

4. A device according to any one of the preceding Claims, **characterised in that** the free end portion (44) of each petal (30) includes on its internal face a hollow spherical surface portion (48) complementary to the knuckle (24, 25), which co-operates with the latter for guiding it in pivoting motion and for retaining it within the housing (28).

5. A device according to any one of the preceding Claims, **characterised in that** it includes means (80) for locking the petals (30) so as to prevent them from deforming elastically.

6. A device according to Claim 5, **characterised in that** the locking means consist of a locking sleeve (80) which is mounted for axial movement between a rearward or locking position in which it surrounds the outside of the free end portions (44) of the petals (30) of the housing (28), and a forward or retracted position in which the end portions (44) of the petals (30) are able to be deformed elastically, substantially radially outwards.

7. A device according to Claim 6, **characterised in that** the locking sleeve (80) is biased elastically towards its locking position.

8. A device according to Claim 6 or Claim 7, **characterised in that** the outer face of the free end portions (44) of the petals (30) is configured as a frustum of a cone (46), and **in that** the internal surface of the locking sleeve (80) has a complementary conical portion (84), the locking position of the locking sleeve (80) being determined by the two said conical surfaces (46, 84) coming into contact with each other.

9. A device according to any one of Claims 6 to 8, **characterised in that** the free end portions (44) of the petals (30) are delimited by a transverse front end surface (34), and **in that** the locking sleeve (80) has an axial rear end surface (82), oriented substantially radially, the retracted position of the locking sleeve (80) being determined by the two said end surfaces (34, 82) coming into contact with each other.

10. A device according to Claim 3, **characterised in that** the fins (62) project radially outwards from the housing (28), and **in that** each fin is delimited radially by a substantially axially oriented edge (68), the said edges constituting a centring surface for a return spring (86) for the locking sleeve (80) which is a helical tension spring having a front end (88) fixed to the sleeve (80) and a rear axial end (90) fixed to the fins (62).

11. A device according to any one of Claims 1 to 10, **characterised in that** the core (54) is subjected to the action of a tension spring (86).

12. A device for fastening and articulating, on a clutch pedal (10) of a motor vehicle, the end of an emitter cylinder (16) for controlling a clutch, in accordance with any one of the preceding Claims, **characterised in that** the knuckle (24) is fixed to the clutch pedal (10).

13. A device according to Claim 12, **characterised in that** the emitter cylinder (16) comprises a piston and a cylinder body (14), and **in that** the housing (28) is fixed to the free end of the piston rod (20).

14. A device according to Claim 12, **characterised in that** the emitter cylinder (16) comprises a piston and a cylinder body (14), and **in that** the housing is fixed to the cylinder body.

## Patentansprüche

1. Vorrichtung (22) zur Befestigung und Anlenkung eines Endes eines Bauteils an einem Betätigungshebel des Bauteils, insbesondere zur Befestigung und Anlenkung eines Endes (20) eines Geberzylinders (16) zur Betätigung einer Kupplung an einem Kupplungspedal (10) eines Kraftfahrzeugs, umfassend ein Kugelgelenk (24), das drehbar in einem Gehäuse (28) gelagert ist, das einen formschlüssigen Auflagesitz (60) trägt, wobei das Gehäuse (28) tulpenförmig mit axial ausgerichteten Segmenten (30) ausgeführt ist, die sich von einer inneren Bodenwand (40) aus erstrecken, die das Gehäuse aufweist, wobei jedes Segment (30) einen Körper in Form eines radial elastisch verformbaren Streifens (42) aufweist, um das Einsetzen des Kugelgelenks (24, 25) in das Gehäuse (28) im Innern der Segmente (30) durch elastische Einpassung entlang der Hauptachse (Y-Y) des Gehäuses (28) zu ermöglichen, und wobei der Auflagesitz (60) einerseits im Innern der Segmente (30) gelagert und zum freien Ende (44) der Segmente (30) gerichtet ist und andererseits in Form einer hohlen Kugelkappe gestaltet ist, wobei das freie Ende (44) wenigstens einiger Segmente (30) in Form von Fingern ausgeführt ist, um das Kugelgelenk (24) im Innern des Gehäuses (28) zu halten,
**dadurch gekennzeichnet,**
**daß** der als Kugelkappe gestaltete Sitz (60) an einem vorderen axialen Ende eines Kerns (54) ausgeführt ist, der in der Einbauposition vor der elastischen Einpassung des Kugelgelenks axial gleitend verschiebbar im Innern des Gehäuses (28) zwischen einer hinteren Ruheposition, in der er durch sein hinteres axiales Ende (58) an der inneren Bodenwand (40) des Gehäuses zur Anlage kommt, und einer vorderen Einbauposition gelagert ist, in der die Segmente (30) radial nach außen abgespreizt sind und elastisch an einem gegenüberliegenden Abschnitt (70) der Seitenwand (56) des Kerns zur Anlage kommen.

2. Vorrichtung nach Anspruch 1, **dadurch gekennzeichnet, daß** der Kern (54) in der Nähe seines vorderen Endes eine zylindrische seitliche Auflagefläche (70) umfaßt, an der komplementäre Abschnitte (50) mit zylindrischer Fläche zur Anlage kommen, die in der Innenfläche der Enden (44) der Segmente (30) ausgebildet sind.

3. Vorrichtung nach einem der Ansprüche 1 oder 2,
**dadurch gekennzeichnet, daß** der Kern (54) radiale Führungsrippen (62) für seine Verschiebungen im Innern des Gehäuses (28) umfaßt, die jeweils gleitend verschiebbar in einem entsprechenden Schlitz (32) eingesetzt sind, der zwei benachbarte Segmente (30) des Gehäuses (28) begrenzt.

4. Vorrichtung nach einem der vorangehenden Ansprüche, **dadurch gekennzeichnet, daß** das freie Ende (44) jedes Segments (30) auf seiner Innenfläche einen mit dem Kugelgelenk (24, 25) formschlüssigen Abschnitt mit Hohlkugelfläche (48) umfaßt, der mit dem Kugelgelenk zusammenwirkt, um es in seiner Drehbewegung zu führen und es im Innern des Gehäuses (28) zu halten.

5. Vorrichtung nach einem der vorangehenden Ansprüche, **dadurch gekennzeichnet, daß** sie Mittel (80) zur Verriegelung der Segmente (30) umfaßt, die ihre elastische Verformung verhindern.

6. Vorrichtung nach Anspruch 5, **dadurch gekennzeichnet, daß** die Verriegelungsmittel aus einer Verriegelungsmuffe (80) bestehen, die axial beweglich zwischen einer hinteren Verriegelungsposition, in der sie die freien Ende (44) der Segmente (30) des Gehäuses (28) außen umgibt, und einer eingezogenen vorderen Position gelagert ist, in der die Enden (44) der Segmente (30), in etwa radial nach außen, elastisch verformt werden können.

7. Vorrichtung nach Anspruch 6, **dadurch gekennzeichnet, daß** die Verriegelungsmuffe (80) elastisch zu ihrer Verriegelungsposition zurückgestellt wird.

8. Vorrichtung nach einem der Ansprüche 6 oder 7, **dadurch gekennzeichnet, daß** die Außenfläche der freien Enden (44) der Segmente (30) als Kegelstück (46) gestaltet ist und daß die Innenfläche der Verriegelungsmuffe (80) ein komplementäres kegelförmiges Teilstück (84) umfaßt, wobei die Verriegelungsposition der Verriegelungsmuffe (80) durch das Inkontakttreten dieser beiden kegelförmigen Flächen (46, 84) bestimmt wird.

9. Vorrichtung nach einem der Ansprüche 6 bis 8, **dadurch gekennzeichnet, daß** die freien Enden (44) der Segmente (30) durch eine vordere Querabschlußfläche (34) begrenzt sind und daß die Verriegelungsmuffe (80) eine in etwa radial ausgerichtete hintere axiale Abschlußfläche (82) umfaßt, wobei die eingezogene Position der Verriegelungsmuffe (80) durch das Inkontakttreten dieser beiden Abschlußflächen (34, 82) bestimmt wird.

10. Vorrichtung nach Anspruch 3, **dadurch gekennzeichnet, daß** die Rippen (62) radial außerhalb des Gehäuses (28) vorstehen und daß jede Rippe radial durch einen in etwa axial ausgerichteten Rand (68) begrenzt ist, wobei diese Ränder eine Zentrierauflagefläche für eine Rückstellfeder (86) zur Rückstellung der Verriegelungsmuffe (80) bilden, bei der es sich um eine Schraubenzugfeder handelt, deren vorderes Ende (88) an der Muffe (80) befestigt ist und deren hinteres axiales Ende (90) an den Rippen (62) befestigt ist.

11. Vorrichtung nach einem der Ansprüche 1 bis 10, **dadurch gekennzeichnet, daß** der Kern (54) der Einwirkung einer Zugfeder (86) ausgesetzt ist.

12. Vorrichtung zur Befestigung und Anlenkung des Endes eines Geberzylinders (16) zur Betätigung einer Kupplung an einem Kupplungspedal (10) eines Kraftfahrzeugs nach einem der vorangehenden Ansprüche,
**dadurch gekennzeichnet,**
**daß** das Kugelgelenk (24) am Kupplungspedal (10) befestigt ist.

13. Vorrichtung nach Anspruch 12, **dadurch gekennzeichnet, daß** der Geberzylinder (16) einen Kolben und einen Zylinderkörper (14) umfaßt und daß das Gehäuse (28) am freien Ende der Kolbenstange (20) befestigt ist.

14. Vorrichtung nach Anspruch 12, **dadurch gekennzeichnet, daß** der Geberzylinder (16) einen Kolben und einen Zylinderkörper (14) umfaßt und daß das Gehäuse am Zylinderkörper befestigt ist.
